# EUROPÄISCHE PATENTSCHRIFT

(11) **EP 0 919 891 B1**
(45) Veröffentlichungstag und Bekanntmachung des Hinweises auf die Patenterteilung: **29.09.2004**
(21) Anmeldenummer: 98121489.3
(22) Anmeldetag: 12.11.1998
(51) Int. Cl.: G05B 19/042

(54) **Anordnung und Verfahren zur Anpassung von Ausgangstreibern von integrierten Schaltungen an die gegebenen Verhältnisse**
Device and method to adapt output drivers of integrated circuits to given situations
Dispositif et procédé pour adapter des circuits d'attaque de sortie de circuits integrés à des situations données

(30) Priorität: 26.11.1997 DE 19752421
(43) Veröffentlichungstag der Anmeldung: 02.06.1999
(73) Patentinhaber: Infineon Technologies AG, 81669 München (DE)
(72) Erfinder: Renner, Franz, 85457 Wörth (DE); Rosenbusch, Jens, 82008 Unterhaching (DE)
(74) Vertreter: Jannig, Peter, Dipl.-Ing.

(56) Entgegenhaltungen:
- EP-A- 0 301 736
- US-A- 5 587 863
- US-A- 5 623 277

## Beschreibung

Die vorliegende Erfindung betrifft Anordnungen gemäß dem Oberbegriff des Patentanspruchs 1 und Verfahren gemäß dem Oberbegriff des Patentanspruchs 6, d.h. Anordnungen und Verfahren zur Anpassung von Ausgangstreibern von integrierten Schaltungen an die gegebenen Verhältnisse.

Derartige Anordnungen und Verfahren werden beispielsweise zur Temperaturkompensation eingesetzt. Dabei werden Vortreiber der Ausgangstransistoren unter Berücksichtigung einer von der Temperatur abhängenden analogen Spannung gesteuert.

Eine derartige Anpassung der Ausgangstreiber wirkt sich in der Regel sehr vorteilhaft aus. Gleichwohl treten mitunter Fälle auf, in denen die Anpassung nicht oder jedenfalls nicht voll zufriedenstellend ist.

Der vorliegenden Erfindung liegt daher die Aufgabe zugrunde, die Anordnungen und Verfahren gemäß den Oberbegriffen der Patentansprüche 1 und 6 derart weiterzubilden, daß durch diese unter allen Umständen eine optimale Anpassung der Ausgangstreiber von integrierten Schaltungen an die gegebenen Verhältnisse erzielbar ist.

Diese Aufgabe wird durch Vorsehen der in den kennzeichnenden Teilen der Patentansprüche 1 und 6 beanspruchten Merkmale gelöst. Demnach ist vorgesehen,
- daß die Anordnung dazu ausgelegt ist, die Anpassung unter Berücksichtigung der Höhe oder des Verlaufs der Versorgungsspannung der integrierten Schaltung und/oder der bei der integrierten Schaltung verwendeten Technologie und/oder der technischen Daten der zu treibenden Last durchzuführen (kennzeichnender Teil des Patentanspruchs 1) bzw.
- daß die Anpassung unter Berücksichtigung der Höhe oder des Verlaufs der Versorgungsspannung der integrierten Schaltung und/oder der bei der integrierten Schaltung verwendeten Technologie und/oder der technischen Daten der zu treibenden Last erfolgt (kennzeichnender Teil des Patentanspruchs 6).

Durch die Berücksichtigung von Zuständen wie der Höhe oder des Verlaufs der Versorgungsspannung der integrierten Schaltung und/oder der bei der integrierten Schaltung verwendeten Technologie und/oder der technischen Daten der zu treibenden Last läßt sich eine genauere Anpassung der Ausgangstreiber der integrierten Schaltung an die gegebenen Verhältnisse erzielen als es bei ausschließlicher Berücksichtigung der Temperatur möglich ist. Dabei kann unter anderem während des Betriebes der integrierten Schaltung der Maximalwert des von den Ausgangstreibern ausgegebenen Stromes individuell festgelegt bzw. variiert werden. Eine derartige Strombegrenzung ermöglicht es beispielsweise, den Strom gerade so groß werden zu lassen wie es zur ordnungsgemäßen Ansteuerung der durch die Ausgangstreiber zu treibenden Last erforderlich ist. Dadurch können unnötig große Ströme und/oder unnötig steile Flanken im zeitlichen Verlauf der von den Ausgangstreibern ausgegebenen Signale vermieden werden, was seinerseits wiederum den positiven Effekt hat, daß die durch den Stromfluß hervorgerufene elektromagnetische Strahlung auf das jeweilige Minimum reduzierbar ist. Die integrierte Schaltung und in der näheren Umgebung derselben angeordnete Schaltungsteile werden nicht mehr als unbedingt notwendig elektromagnetischer Strahlung ausgesetzt.

Vorzugsweise erfolgt die Bereitstellung der bei der Anpassung der Ausgangstreiber zu berücksichtigenden Parameter und/oder der darauf basierenden Steuersignale in digitaler Form (Unteransprüche 2 bzw. 7). Dies ermöglicht es unter anderem,
- diese weitestgehend störungsfrei vom Ort der Erzeugung zum anzupassenden Ausgangstreiber zu übertragen,
- diese nicht ununterbrochen zu erzeugen (weil sie gespeichert werden können),
- diese aus der integrierten Schaltung insbesondere zu Testzwecken einfach auszugeben, und
- dem Benutzer die Möglichkeit zu geben, auf die Anpassung der Ausgangstreiber Einfluß zu nehmen (weil digitale Signale erheblich einfacher als analoge Signale verarbeitet werden können).

Die Vorteile dieser und anderer Möglichkeiten liegen auf der Hand: die Ausgangstreiber sind auch noch nach deren Herstellung (während des Betriebes der integrierten Schaltung) auf äußerst einfache Weise exakt an die jeweiligen Gegebenheiten und individuellen Bedürfnisse anpaßbar.

Es wurden mithin Anordnungen und Verfahren gefunden, durch deren Verwendung die Ausgangstreiber von integrierten Schaltungen unter allen Umständen optimal betrieben werden können.

Weitere vorteilhafte Weiterbildungen der Erfindung sind Gegenstand der Unteransprüche 3 bis 5 und 8 bis 10.

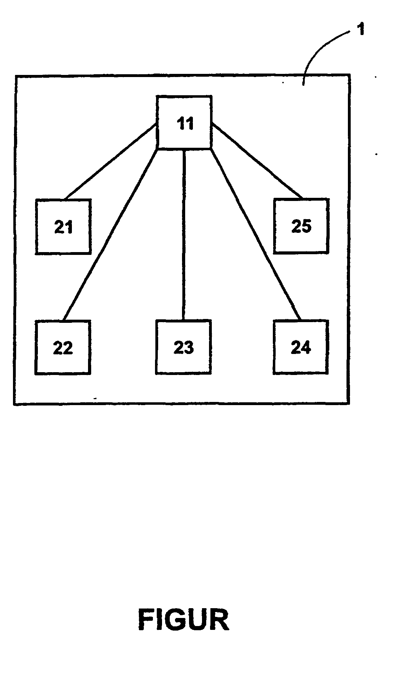

Die Erfindung wird nachfolgend anhand eines Ausführungsbeispiels unter Bezugnahme auf die Zeichnung näher beschrieben.

Die Figur zeigt schematisch eine integrierte Schaltung, deren Ausgangstreiber es anzupassen gilt.

Die integrierte Schaltung sei im betrachten Beispiel ein Mikroprozessor oder ein Mikrocontroller. Hierauf besteht jedoch keine Einschränkung. Die Erfindung ist auch bei beliebigen anderen integrierten Schaltungen anwendbar.

Die integrierte Schaltung weist eine Vielzahl von Eingangsund/oder Ausgangsanschlüssen auf, wobei denjenigen Anschlüssen, die als Ausgangsanschlüsse wirken können, zumindest teilweise Ausgangstreiber vorgeschaltet sind. Den besagten Ausgangstreibern obliegt es dabei, dafür zu sorgen, daß das auszugebende Signal mit einer vorgegebenen oder vorgegebenen maximalen Spannung und/oder einer vorgegebenen oder vorgegebenen maximalen Stromstärke ausgegeben wird.

Die Ausgangstreiber sind erfindungsgemäß dazu ausgelegt, während des Betriebes der integrierten Schaltung in Abhängigkeit von bestimmten Zuständen konfigurierbar bzw. betreibbar zu sein. Diese Zustände sind im betrachteten Beispiel die Temperatur der integrierten Schaltung oder deren Umgebung und/oder die Höhe oder der Verlauf der Versorgungsspannung der integrierten Schaltung und/oder die bei der integrierten Schaltung verwendete Technologie und/oder die technischen Daten der zu treibenden Last und/oder die Anforderungen seitens der zu treibenden Last an die Ausgangstreiber.

Im betrachteten Beispiel ist die Stärke der Ausgangstreiber (deren Innenwiderstand) in Abhängigkeit von den genannten Parametern bzw. Zustandsinformationen variierbar. Dies kann beispielsweise dadurch bewerkstelligt werden, daß die Ausgangstreiber durch parallel geschaltete Transistoren gebildet werden, und daß die Anzahl der einen Ausgangstreiber bildenden Transistoren in Abhängigkeit von den genannten Parametern variiert wird.

Die Erfindung ist hierauf jedoch nicht beschränkt. Die Treiberstärke kann auch anders als durch Variieren der Anzahl von parallelen Transistoren verändert werden (beispielsweise kann auch zwischen verschieden leistungsfähigen Transistoren oder Transistorfeldern umgeschaltet werden), und es ist auch nicht die Treiberstärke, die in Abhängigkeit von den genannten Parametern variierbar sein muß (beispielsweise kann auch "nur" der Normal-Pegel der von den Ausgangstreibern ausgegebenen Signale variiert werden).

Die in der Figur gezeigte integrierte Schaltung ist dort mit dem Bezugszeichen 1 bezeichnet. Die wie beschrieben anzupassenden Ausgangstreiber der integrierten Schaltung 1 sind in einem oder mehreren Ausgangstreiber-Abschnitten 11 untergebracht. Dieser mindestens eine Ausgangstreiber-Abschnitt 11 ist über Leiterbahnen mit Parametererfassungs-Abschnitten 21 bis 25 verbunden. Die Parametererfassungs-Abschnitte 21 bis 25 enthalten Parametererfassungs-Einheiten, durch welche die Parameter erfaßt werden, in Abhängigkeit von welchen die Ausgangstreiber des Ausgangstreiber-Abschnittes 11 anzusteuern sind.

Von den in den Parametererfassungs-Abschnitten 21 bis 25 vorgesehenen Parametererfassungs-Einheiten dienen
- die Parametererfassungs-Einheit des Parametererfassungs-Abschnittes 21 zur Erfassung der Temperatur des Chips oder der Umgebung des Chips, auf welchem die integrierte Schaltung untergebracht ist,
- die Parametererfassungs-Einheit des Parametererfassungs-Abschnittes 22 zur Erfassung der Höhe und/oder des Verlaufs der Versorgungsspannung der integrierten Schaltung 1,
- die Parametererfassungs-Einheit des Parametererfassungs-Abschnittes 23 zur Erfassung der bei der integrierten Schaltung verwendeten Technologie,
- die Parametererfassungs-Einheit des Parametererfassungs-Abschnittes 24 zur Erfassung der technischen Daten der zu treibenden Last und/oder der Anforderungen seitens der zu treibenden Last an die Ausgangstreiber, und
- die Parametererfassungs-Einheit des Parametererfassungs-Abschnittes 25 zur Entgegennahme von extern durch andere Schaltungskomponenten oder durch den Benutzer eingegebenen sonstigen Zustandsinformationen bzw. Parametern.

Jeder der Parametererfassungs-Abschnitte 21 bis 25 kann in beliebiger Anzahl vorgesehen werden, und die einzelnen Parametererfassungs-Abschnitte 21 bis 25 können an beliebigen Stellen der integrierten Schaltung angeordnet werden. Einzelne oder mehrere Parametererfassungs-Abschnitte können auch zu gemeinsamen Parametererfassungs-Abschnitten zusammengefaßt werden.

Es kann sich als günstig erweisen, wenn einer oder mehrere der Parametererfassungs-Abschnitte 21 bis 25 in ihrer Funktion durch andere Komponenten der integrierten Schaltung (beispielsweise durch die jeweils anderen Parametererfassungs-Abschnitte) und/oder von außerhalb der integrierten Schaltung 1 (durch andere Schaltungskomponenten und/oder Eingaben des Benutzers) steuerbar sind, wobei die Steuerbarkeit insbesondere die Einstellung der Empfindlichkeit für die durch die betreffende Parametererfassungs-Einheit zu erfassende Größe, die Einstellung von Schwellenwerten für die durch die betreffende Parametererfassungs-Einheit zu erfassende Größe, die Art und Weise der Reaktion auf bestimmte Ereignisse, die Aktivierung und/oder Deaktivierung der jeweiligen Parametererfassungs-Einheiten umfassen kann.

Die durch die Parametererfassungs-Einheiten der Parametererfassungs-Abschnitte 21 bis 25 erfaßten Parameter oder diese repräsentierende Signale oder auf diesen basierende Steuersignale zur Ansteuerung der Ausgangstreiber werden zu dem mindestens einen Ausgangstreiber-Abschnitt 11 übertragen und dort zur Ansteuerung der Ausgangstreiber verwendet.

Die zu übertragenden Daten und/oder (Steuer-)Signale werden vorzugsweise in digitaler Form übertragen. D.h., sie werden entweder bereits durch die Parametererfassungs-Einheiten digital generiert oder noch in den Parametererfassungs-Abschnitten 21 bis 25 digitalisiert.

Alternativ kann vorgesehen werden, die zu übertragenden Daten und/oder (Steuer-)Signale erst später zu digitalisieren, sie also nur über einen Teil des Weges zu den Ausgangstreibern in digitaler Form zu übertragen.

Die Übertragung der Daten und/oder (Steuer-)Signale in digitaler Form ermöglicht eine im wesentlichen störungsfreie Übertragung derselben. Darüber hinaus gestaltet sich auch eine gegebenenfalls erforderliche Auswertung oder Weiterverarbeitung der Daten und/oder (Steuer-)Signale im Ausgangstreiber-Abschnitt 11 sehr einfach: digitale Daten sind im Gegensatz zu analogen Daten problemlos weiterverarbeitbar, verknüpfbar und speicherbar.

Die Speicherbarkeit der Daten und/oder (Steuer-)Signale ermöglicht es, daß diese nicht ständig, sondern nur einmalig (beispielsweise nach der Inbetriebnahme der integrierten Schaltung) und/oder nur in mehr oder weniger großen zeitlichen Abständen ermittelt und übertragen (über die integrierte Schaltung verteilt) werden müssen. Dadurch läßt sich der Energieverbrauch und die Erwärmung der integrierten Schaltung auf ein Minimum reduzieren.

Das Vorliegen der Daten und/oder (Steuer-)Signale in digitaler Form ermöglicht es auch, diese mit relativ geringem Aufwand über die Ausgangsanschlüsse der integrierten Schaltung auszugeben, wodurch sich die ordnungsgemäße Funktion der Parametererfassungs-Einheiten außerordentlich leicht und zuverlässig testen läßt.

Dies und die Vielzahl und die Art der zur Ansteuerung der Ausgangstreiber herangezogenen Zustandsinformationen bzw. Parameter ermöglicht eine optimale Anpassung der Ausgangstreiber. Die Abhängigkeit der Ausgangstreiber-Ansteuerung von der zu treibenden Last, deren technische Daten und/oder Anforderungen an den Ausgangstreiber beispielsweise durch Benutzereingaben erhalten werden können, ermöglicht es dabei erstmals, die Ausgangstreiber im Hinblick auf die elektromagnetische Verträglichkeit (EMV) zu optimieren: die Begrenzung des Stromflusses auf das erforderliche Maß läßt die durch den Stromfluß erzeugte elektromagnetische Strahlung auf ein Minimum reduzieren.

Abschließend kann zusammenfassend festgestellt werden, daß die beschriebene Anordnung und das beschriebene Verfahren es ermöglichen, die Ausgangstreiber von integrierten Schaltungen einfach und zuverlässig unter allen Umständen optimal zu betreiben.

### Bezugszeichenliste

- 1: integrierte Schaltung

- 11: Ausgangstreiber-Abschnitt
- 21 - 25: Parametererfassungs-Abschnitte

## Patentansprüche

1. Anordnung zur Anpassung von Ausgangstreibern von integrierten Schaltungen an die gegebenen Verhältnisse,
**dadurch gekennzeichnet,**
**daß** die Anordnung dazu ausgelegt ist, die Anpassung unter Berücksichtigung der Höhe oder des Verlaufs der Versorgungsspannung der integrierten Schaltung und/oder der bei der integrierten Schaltung verwendeten Technologie und/oder der technischen Daten der zu treibenden Last durchzuführen.

2. Anordnung nach Anspruch 1,
**dadurch gekennzeichnet,**
**daß** die Anordnung dazu ausgelegt ist, die bei der Anpassung der Ausgangstreiber zu berücksichtigenden Parameter und/oder die die darauf basierenden Steuersignale zur Anpassung der Ausgangstreiber in digitaler Form bereitzustellen.

3. Anordnung nach Anspruch 1 oder 2,
**dadurch gekennzeichnet,**
**daß** die Anordnung dazu ausgelegt ist, die bei der Anpassung der Ausgangstreiber zu berücksichtigenden Parameter und/oder die darauf basierenden Steuersignale zur Anpassung der Ausgangstreiber digital zu erzeugen oder alsbald nach deren Erzeugung zu digitalisieren.

4. Anordnung nach einem der vorhergehenden Ansprüche,
**dadurch gekennzeichnet,**
**daß** die Anordnung dazu ausgelegt ist, die bei der Anpassung der Ausgangstreiber zu berücksichtigenden Parameter und/oder darauf basierenden Steuersignale zur Anpassung der Ausgangestreiber digital zu den Ausgangstreibern zu übertragen.

5. Anordnung nach einem der vorhergehenden Ansprüche,
**dadurch gekennzeichnet,**
**daß** die Anordnung dazu ausgelegt ist, die Anpassung der Ausgangstreiber unter Berücksichtigung der Temperatur der integrierten Schaltung oder deren Umgebung und/oder von Anforderungen seitens der zu treibenden Last an die Ausgangstreiber durchzuführen.

6. Verfahren zur Anpassung von Ausgangstreibern von integrierten Schaltungen an die gegebenen Verhältnisse,
**dadurch gekennzeichnet,**
**daß** die Anpassung unter Berücksichtigung der Höhe oder des Verlaufs der Versorgungsspannung der integrierten Schaltung und/oder der bei der integrierten Schaltung verwendeten Technologie und/oder der technischen Daten der zu treibenden Last erfolgt.

7. Verfahren nach Anspruch 6,
**dadurch gekennzeichnet,**
**daß** die bei der Anpassung der Ausgangstreiber zu berücksichtigenden Parameter und/oder die darauf basierenden Steuersignale zur Anpassung der Ausgangstreiber in digitaler Form bereitgestellt werden.

8. Verfahren nach Anspruch 6 oder 7,
**dadurch gekennzeichnet,**
**daß** die bei der Anpassung der Ausgangstreiber zu berücksichtigenden Parameter und/oder die darauf basierenden Steuersignale zur Anpassung der Ausgangstreiber digital erzeugt oder alsbald nach deren Erzeugung digitalisiert werden.

9. Verfahren nach einem der Ansprüche 6 bis 8,
**dadurch gekennzeichnet,**
**daß** die bei der Anpassung der Ausgangstreiber zu berücksichtigenden Parameter und/oder darauf basierenden Steuersignale zur Anpassung der Ausgangstreiber digital zu den Ausgangstreibern übertragen werden.

10. Verfahren nach einem der Ansprüche 6 bis 9,
**dadurch gekennzeichnet,**
**daß** die Anpassung der Ausgangstreiber unter Berücksichtigung der Temperatur der integrierten Schaltung oder deren Umgebung und/oder von Anforderungen seitens der zu treibenden Last an die Ausgangstreiber durchgeführt wird.

## Claims

1. Arrangement for matching output drivers of integrated circuits to the specified conditions,
**characterized in that** the arrangement is designed to perform the matching taking into account the level or the curve of the supply voltage for the integrated circuit and/or the technology used in the integrated circuit and/or the technical data for the load which is to be driven.

2. Arrangement according to Claim 1,
**characterized in that** the arrangement is designed to provide the parameters to be taken into account when matching the output drivers, and/or the control signals, based on said parameters, for matching the output drivers, in digital form.

3. Arrangement according to Claim 1 or 2,
**characterized in that** the arrangement is designed to produce the parameters to be taken into account when matching the output drivers, and/or the control signals, based on said parameters, for matching the output drivers, digitally, or to digitize them immediately after they have been produced.

4. Arrangement according to one of the preceding claims,
**characterized in that** the arrangement is designed to transmit the parameters to be taken into account when matching the output drivers, and/or control signals, based on said parameters, for matching the output drivers, digitally to the output drivers.

5. Method according to one of the preceding claims,
**characterized in that** the arrangement is designed to perform the matching for the output drivers taking into account the temperature of the integrated circuit or its environment and/or demands which the load to be driven makes on the output drivers.

6. Method for matching output drivers of integrated circuits to the specified conditions,
**characterized in that** the matching is performed taking into account the level or the curve of the supply voltage for the integrated circuit and/or the technology used in the integrated circuit and/or the technical data for the load which is to be driven.

7. Method according to Claim 6,
**characterized in that** the parameters to be taken into account when matching the output drivers, and/or the control signals, based on said parameters, for matching the output drivers, are provided in digital form.

8. Method according to Claim 6 or 7,
**characterized in that** the parameters to be taken into account when matching the output drivers and/or the control signals, based on said parameters, for matching the output drivers are produced digitally or are digitized immediately after they have been produced.

9. Method according to one of Claims 6 to 8,
**characterized in that** the parameters to be taken into account when matching the output drivers, and/or the control signals, based on said parameters, for matching the output drivers, are transmitted to the output drivers in digital form.

10. Method according to one of Claims 6 to 9,
**characterized in that** the matching for the output drivers is performed taking into account the temperature of the integrated circuit or its environment and/or demands which the load to be driven makes on the output drivers.

## Revendications

1. Agencement pour l'adaptation de drivers de sortie de circuits intégrés aux conditions données, **caractérisé en ce que** l'agencement est conçu de façon à procéder à l'adaptation sous considération de la valeur ou de la courbe de la tension d'alimentation du circuit intégré et/ou de la technologie utilisée pour le circuit intégré et/ou des caractéristiques techniques de la charge devant être entraînée.

2. Agencement selon la revendication 1, **caractérisé en ce que** l'agencement est conçu de façon à mettre à disposition sous forme numérique les paramètres devant être pris en considération pour l'adaptation des drivers de sortie et/ou les signaux de commande basés sur ces derniers pour l'adaptation des drivers de sortie.

3. Agencement selon l'une quelconque des revendications 1 ou 2, **caractérisé en ce que** l'agencement est conçu de façon à générer sous forme numérique les paramètres devant être pris en considération pour l'adaptation des drivers de sortie et/ou les signaux de commandes basés sur ces derniers pour l'adaptation des drivers de sortie ou à les numériser sitôt après leur génération.

4. Agencement selon l'une quelconque des revendications précédentes, **caractérisé en ce que** l'agencement est conçu de façon à transmettre numériquement les paramètres devant être pris en considération pour l'adaptation des drivers de sortie et/ou les signaux de commandes basés sur ces derniers pour l'adaptation des drivers de sortie vers les drivers de sortie.

5. Agencement selon l'une quelconque des revendications précédentes, **caractérisé en ce que** l'agencement est conçu de façon à procéder à l'adaptation des drivers de sortie sous considération de la température du circuit intégré ou de son environnement et/ou des exigences de la charge devant être entraînée en ce qui concerne les drivers de sortie.

6. Procédé pour l'adaptation de drivers de sortie de circuits intégrés aux conditions données, **caractérisé en ce que** l'adaptation a lieu sous considération de la valeur ou de la courbe de la tension d'alimentation du circuit intégré et/ou de la technologie utilisée pour le circuit intégré et/ou des caractéristiques techniques de la charge devant être entraînée.

7. Procédé selon la revendication 6, **caractérisé en ce que** les paramètres devant être pris en considération pour l'adaptation des drivers de sortie et/ou les signaux de commandes basés sur ces derniers pour l'adaptation des drivers sont mis à disposition sous forme numérique.

8. Procédé selon l'une quelconque des revendications 6 ou 7, **caractérisé en ce que** les paramètres devant être pris en considération pour l'adaptation des drivers de sortie et/ou les signaux de commandes basés sur ces derniers pour l'adaptation des drivers sont générés sous forme numérique ou numérisés sitôt après leur génération.

9. Procédé selon l'une quelconque des revendications 6 à 8, **caractérisé en ce que** les paramètres devant être pris en considération pour l'adaptation des drivers de sortie et/ou les signaux de commandes basés sur ces derniers pour l'adaptation des drivers sont transmis numériquement vers les drivers de sortie.

10. Procédé selon l'une quelconque des revendications 6 à 9, **caractérisé en ce que** l'adaptation des drivers de sortie est réalisée sous considération de la température du circuit intégré ou de son environnement et/ou des exigences de la charge devant être entraînée en ce qui concerne les drivers de sortie.
